# EUROPÄISCHE PATENTSCHRIFT

(11) **EP 0 578 951 B1**
(45) Veröffentlichungstag und Bekanntmachung des Hinweises auf die Patenterteilung: **17.07.1996**
(21) Anmeldenummer: 93108556.7
(22) Anmeldetag: 27.05.1993
(51) Int. Cl.: F02K 1/09, F02K 7/16, F02K 1/30

(54) **Strahltriebwerk**
Jet engine
Propulseur à réaction

(30) Priorität: 11.07.1992 DE 4222947
(43) Veröffentlichungstag der Anmeldung: 19.01.1994
(73) Patentinhaber: Daimler-Benz Aerospace Aktiengesellschaft, D-81663 München (DE)
(72) Erfinder: Kretschmer, Joachim, Dipl.-Ing., W-8133 Feldafing (DE)

(56) Entgegenhaltungen:
- EP-A- 0 434 565
- DE-A- 4 012 212
- DE-B- 1 289 364
- FR-A- 998 465
- FR-A- 1 124 095
- FR-A- 1 241 879
- FR-A- 2 568 316
- US-A- 3 049 873
- US-A- 4 527 388
- US-A- 5 054 288

## Beschreibung

Die Erfindung bezieht sich auf ein Strahltriebwerk, insbesondere ein Hyperschall-Kombinationstriebwerk, nach dem Oberbegriff des Patentanspruchs 1 bzw. 8.

Aus der US-PS 4 527 388 ist ein Mantelstrom-Triebwerk mit einer konvergenten Schubdüse und einem zur Veränderung des Düsenhalsquerschnitts im Düseninneren axial verstellbaren, pilzförmigen Zentralkörper bekannt, bei dem der um das Grundtriebwerk herumgeführte äussere Kaltluftstrom dem die Schubdüse durchsetzenden Heißgasstrom über einen am Düsenaustrittsende angeordneten Luftauslaßkanal mit einer die Schubdüse konvergent umschließenden äußeren Begrenzungswand zugemischt wird, welche zur Regulierung des wirksamen Luftkanalquerschnitts und damit des Kaltluft-/Heißgasstromverhältnisses unabhängig vom Zentralkörper axial verstellbar ist. Ein derartiges Mantelstromtriebwerk mit einer am Austrittsende konvergenten, zur Anpassung an unterschiedliche Zweistrom-Mengenverhältnisse verstellbaren Schubdüse für einen hinsichtlich Flughöhe und -geschwindigkeit begrenzten Einsatzbereich ist nicht Gegenstand der Erfindung.

Ferner sind aus der DE 40 10 471 A1 und der DE 40 12 212 A1 Hyperschall-Kombinationstriebwerke der beanspruchten Art bekannt, die bei niedrigen Fluggeschwindigkeiten bis zu etwa 3 Mach als Turbinenstrahltriebwerk und im oberen Geschwindigkeitsbereich zwischen 3 und etwa 7 Mach als Staustrahltriebwerk arbeiten und daher Schubdüsen benötigen, die sowohl hinsichtlich der engsten Querschnittsfläche als auch hinsichtlich des Erweiterungsverhältnisses über eine sehr hohe Variationsbreite verfügen und zu diesem Zweck zusätzlich zu einem pilzförmigen Zentralkörper, der zur Veränderung des Düsenhalsquerschnitts axial zwischen dem Ein- und Austrittsquerschnitt der divergenten Düsenaußenwand verstellbar ist, am Düsenaustrittsende schwenkbare Heckklappen besitzen, von denen die obere sich im Staustrahlbetrieb in der voll ausgeschwenkten Lage an eine Expansionsrampe an dem dem Triebwerk zugeordneten Flugkörper anlegt und im Turbinenstrahlbetrieb, wenn die Heckklappen auf eine den Heißgas-Strömungskanal verengende Position eingeschwenkt sind, einen Luftkanal freisteuert, über den die Grenzschichtluft vom Triebwerkseinlauf in den Heißgasstrahl im Bereich der Expansionsrampe stromabwärts der oberen Heckklappe eingeblasen wird. Problematisch bei derartigen Triebwerken ist zum einen der hohe mechanische Bau- und vor allem Dichtaufwand für die verschwenkbaren Schubdüsenklappen und zum anderen die gerade in kritischen Flugzuständen ausgeprägte Vortriebseinbuße. So ergibt sich im Transschallbetrieb eine höchst störende Unterdruckzone an der Triebwerksunterseite und Zunahme des Heckwiderstands, die ihre Ursache in einer sich im eingeschwenkten Zustand der Düsenklappen am divergenten Ende der Schubdüsenaußenwand aufgrund einer Ablösung der Umgebungsströmung ausbildenden Totwasserregion haben, und ferner kommt es in der Start- und/oder der Umschaltphase vom Turbo- auf den Staustrahlbetrieb zu deutlichen Schubverlusten, weil die erzielbaren Querschnittsänderungen des Heißgas-Strömungskanals nicht für eine schuboptimale Anpassung an den sich drastisch ändernden Heißgas-Volumenstrom ausreichen.

Aufgabe der Erfindung ist es, ein Strahltriebwerk der eingangs genannten Art so auszubilden, daß sich die Geometrie des schubdüsenbegrenzten Heißgas-Strömungskanals auf konstruktiv einfache Weise mit hohem Vortriebs-Wirkungsgrad an stark differierende Betriebsverhältnisse, wie sie insbesondere bei den geschilderten Hyperschall-Kominationsantrieeen auftreten, anpassen läßt.

Diese Aufgabe wird erfindungsgemäß durch das im Patentanspruch 1 und/oder 8 gekennzeichnete Strahltriebwerk gelöst.

Erfindungsgemäß wird durch die axial verfahrbare, glockenförmige, divergente Schubdüsenverlängerung einerseits in Verbindung mit der beanspruchten Zentralkörper-Verstellbarkeit auf baulich einfache, leckagearme Weise ein sowohl hinsichtlich der Austritts- als auch hinsichtlich der Düsenhals-Flächengröße hochgradig variabler Querschnittsverlauf des von der Düsenkontur begrenzten Heißgas-Strömungskanals erhalten, so daß sich die Schubdüse problemlos mit hohem Vortriebswirkungsgrad auf stark unterschiedliche Düsendruckverhältnisse und Heißgasströme, etwa bei der oben erwähnten Umschaltung vom Turbo- auf den Staustrahlantrieb, einstellen läßt, und andererseits in Verbindung mit der ringförmigen, in der von der Heißgas-Strahlbegrenzung zurückgezogenen Lage der Schubdüsenverlängerung zugeschalteten Sekundärlufteinblasung am Austrittsende der festen Düsenaußenwand der dort insbesondere im Transschallbereich ausgeprägte Totwasser-Effekt wirksam abgebaut und dadurch der Heckwiderstand und die vortriebsmindernde Unterdruckzone auf der Triebwerksunterseite deutlich reduziert, mit der weiteren baulichen Vereinfachung, daß das axial verfahrbare Düsenverlängerungsteil nicht nur in der Ausfahrposition die Erweiterung der Düsenaußenwand, sondern zusätzlich im eingefahrenen Zustand auch die äußere Umgrenzung des Luftkanals und Steuerung der Sekundärlufteinblasung übernimmt.

Im Hinblick auf eine weitere Verbesserung der Vortriebswirkung ist in vorteilhafter Ausgestaltung der Erfindung gemäß Anspruch 2 das Düsenverlängerungsteil im eingefahrenen Zustand zur Regelung des Luftkanal-Auslaßquerschnitts begrenzt axial verstellbar, um durch die Lufteinblasung einen möglichst großen zusätzlichen Schubgewinn zu erzielen. Aus Gründen einer gleichmäßigen Sekundärluftverteilung und baugünstigen Abdichtung ist ferner gemäß Anspruch 3 zur Sekundärluftzufuhr zum Luftauslaßkanal vorzugsweise ein die Düsenaußenwand umgreifender, triebwerksfester, in Umfangsrichtung geschlossener Verteilerring mit einem in Richtung des Düsenaustrittsendes offenen, im eingefahrenen Zustand des verstellbaren Düsenverlängerungsteils von diesem dichtend umschlossenen Ringspalt vorgesehen, wobei die Abdichtung zwischen dem Verteilerring und dem Düsenverlängerungsteil im Hinblick auf die bevorzugte Regulierbarkeit des Luftkanalquerschnitts zweckmäßigerweise gemäß Anspruch 4 durch eine im eingefahrenen Zustand des Verlängerungsteils innerhalb eines begrenzten Axialhubs wirksame Gleitdichtung erfolgt und der Verteilerring in einbaugünstiger Weise gemäß Anspruch 5 bevorzugt im Bereich des geringsten Düsenwandaußendurchmessers angeordnet ist.

Zum Abschalten der in der Ausfahrposition des Düsenverlängerungsteils nicht benötigten Sekundärlufteinblasung sind gemäß Anspruch 6 zweckmäßigerweise stromaufwärts des Luftauslaßkanals bzw. Verteilerrings Absperrorgane vorgesehen.

Bei Triebwerken, die mit einer Grenzschichtabsaugung am Triebwerkseinlauf in Flugzuständen ohne Heißgaskanal-Verlängerung mittels des ausfahrbaren Schubdüsenteils arbeiten, insbesondere Hyperschalltriebwerken im Turbobetrieb, wird gemäß Anspruch 7 in besonders bevorzugter Weise die Grenzschichtluft zur Sekundärlufteinblasung am divergenten Ende der Düsenaußenwand verwendet.

Um die Variationsbreite der erzielbaren Düsenhalsquerschnittsänderungen weiter zu erhöhen, ist der Zentralkörper mit seinem größten Querschnitt in besonders bevorzugter Weise gemäß Anspruch 9 in der Ausfahrposition der divergenten Düsenverlängerung zwischen dem engsten Querschnitt der triebwerksfesten Düsenaußenwand und der Austrittsebene der Düsenverlängerung verstellbar angeordnet.

Schließlich wird gemäß Anspruch 10 eine weitere, gesteuerte Expansion des Schubstrahls abströmseitig der ausgefahrenen Schubdüsenverlängerung vorzugsweise durch eine den Schubstrahl einseitig begrenzende, flugkörperfeste Expansionsrampe erzielt.

Die Erfindung wird nunmehr anhand eines Ausführungsbeispiels in Verbindung mit den Zeichnungen näher erläutert. Es zeigen in stark schematisierter Darstellung:
- **Fig. 1**: ein Hyperschall-Kombinationstriebwerk im Längsschnitt mit ausgefahrener Schubdüsenverlängerung und der Zentralkörper-Position kleinsten Düsenhalsquerschnitts im Hyperschallbetrieb;
- **Fig. 2**: eine vergrößerte Darstellung der Schubdüse im Unterschall-Turbobetrieb;
- **Fig. 3**: eine der Fig. 2 entsprechende Darstellung der oberen Schubdüsenhälfte im Überschallturbobetrieb; und
- **Fig. 4**: die Schubdüse im Stauluftbetrieb, in der oberen Figurenhälfte nahe der Umschalt-Machzahl und in der unteren Figurenhälfte im Hyperschallflug.

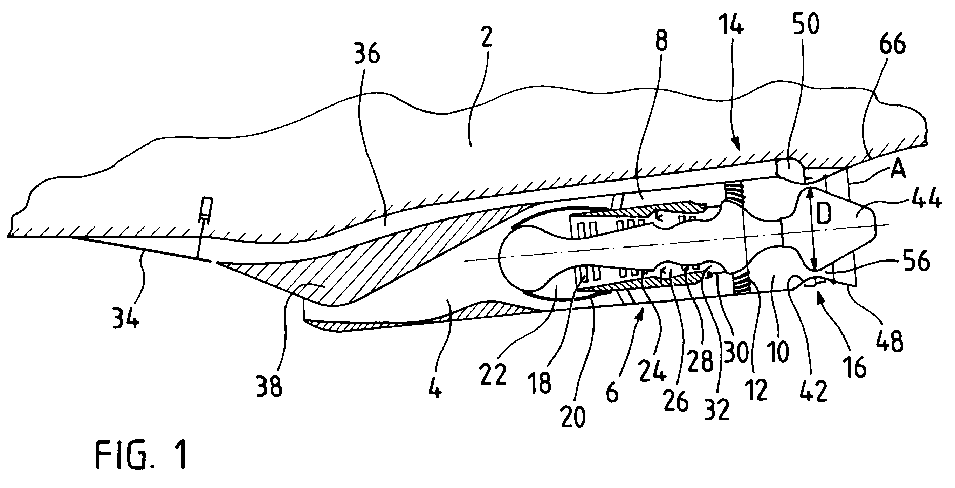

Das in Fig. 1 gezeigte Hpperschall-Kombinationstriebwerk, welches auf der Unterseite eines nicht näher dargestellten Hyperschallflugzeugs 2 befestigt ist, besteht im wesentlichen aus einem Lufteinlaß 4, einem innenliegenden Turbotriebwerk 6, einem aus einem Stauluftkanal 8 und einer Brennkammer 10 mit Einspritzvorrichtungen 12 bestehenden Staustrahltriebwerk 14 und einer Schubdüse 16.

Das Turbotriebwerk 6 umfaßt einen durch ein Umschaltorgan 20 verschließbaren Turboeinlaßkanal 22 mit einem Niederdruck- und einem Hochdruckverdichter 18, 24, eine Brennkammer 26, eine Turbine 28 und einen durch einen Ringschieber 30 verschließbaren Turboauslaßkanal 32.

Im Turbobetrieb, der vom Start bis zu einer Umschaltmachzahl von etwa 3 mit Düsendruckverhältnissen zwischen ca. 4 und 40 eingeschaltet ist, gelangt die über den Einlaß 4 einströmende Luft über das dann geöffnete Umschaltorgan 20 in den Turboeinlaßkanal 22, wo sie mittels der Verdichter 18, 24 komprimiert und anschließend in der Brennkammer 26 zusammen mit flüssig gespeichertem Wasserstoff verbrannt wird. Nach der arbeitsleistenden Teilexpansion in der Turbine 28 wird der Heißgasstrom über den ebenfalls geöffneten Ringschieber 30 in den Stauluftkanal 8 eingeleitet und nach Passieren der Einspritzvorrichtungen 12 und der Brennkammer 10, die im Turbobetrieb etwa ab ach 0,9 als Nachbrenner mit Wasserstoff als Treibstoff betrieben wird, in der Düse 16 schaberzeugend entspannt. Zur Absaugung der Rumpfgrenzschicht stromaufwärts des Lufteinlasses 4 im Turbobetrieb ist eine in Fig. 1 in der Schließlage gezeigte Verschlußklappe 34 vorgesehen, an die sich ein zwischen der Flugzeug-Unterseite und dem Hyperschall-Triebwerk zum Triebwerkheck verlaufender Grenzschichtkanal 36 anschließt.

Im Staustrahlbetrieb, der von der Umschalt-Machzahl bis zu Hyperschall-Fluggeschwindigkeiten von mehr als 6 Mach mit Düsendruckverhältnissen zwischen etwa 35 und 500 eingeschaltet ist, sind das Umschaltorgan 20 und der Ringschieher 30 ebenso wie die Verschlußklappe 34 geschlossen, so daß das Turbotriebwerk 6 und der Grenzschichtkanal 36 deaktiviert sind, und der gesamte Luftstrom wird einlaufseitig mittels einer verstellbaren Rampenanordnung 38 stoßverdichtet und strömt über den Stauluftkanal 8 in die Brennkammer 10, wo er zusammen mit über die Einspritzvorrichtungen 12 zugeführtem Wasserstoff verbrannt wird und anschließend in dem von der Schubdüse 16 begrenzten Heißgas-Strömungskanal schuberzeugend expandiert.

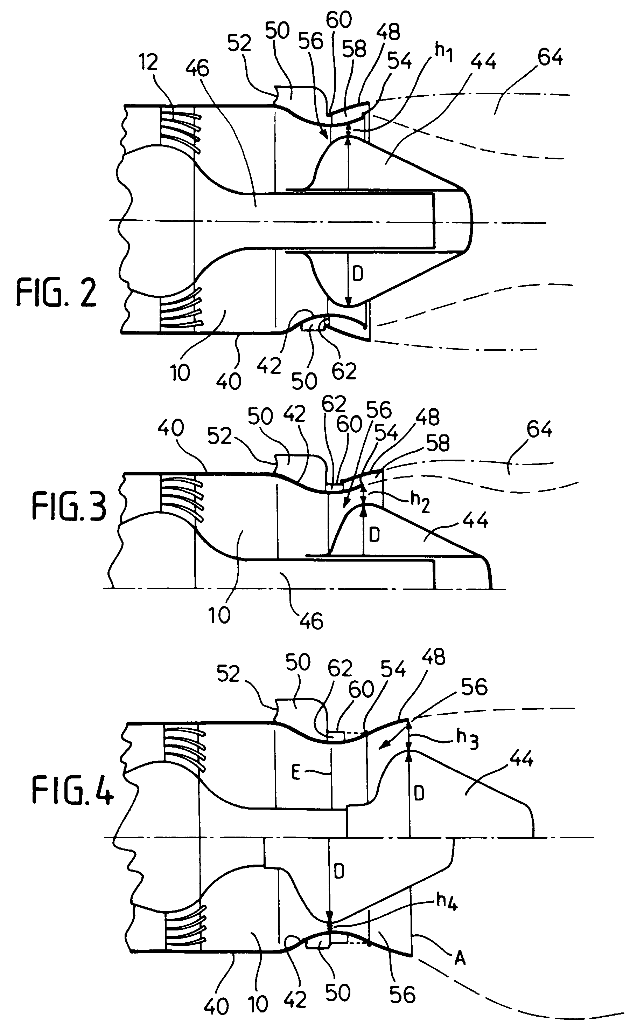

Die Ausbildung der Schubdüse 16 und die unterschiedlichen Querschnittskonfigurationen des von ihr begrenzten Heißgas-Strömungskanals in den verschiedenen Flugzuständen werden anhand der Fig. 2 bis 4 näher erläutert. Als Hauptbestandteile enthält die Schubdüse 16 eine an die zylindrische Brennkammerwand 40 anschließende, triebwerksfeste, konvergent-divergente, rotationssymmetrische Düsenaussenwand 42, einen pilzförmigen Zentralkörper 44, der auf einem mittleren, triebwerksfesten Träger 46 axial verstellbar angeordnet ist, ein axial verfahrbares, divergentes, ebenfalls rotationssymmetrisches Schubdüsen-Verlängerungsteil 48 und einen die Düsenaußenwand 42 im Bereich des konvergenten Wandabschnittes ringförmig umschliessenden Kaltluft-Verteilerring 50 mit einem an das hintere Ende des Grenzschichtkanals 36 angeschlossenen Luftzulauf 52.

Im Turbobetrieb ohne Nachverbrennung, d.h. bei Fluggeschwindigkeiten bis zu etwa 0,9 Mach, liegt der Zentralkörper 44 mit seinem größten Querschnitt D zwischen der engsten Stelle und dem Austrittsende 54 der Düsenaußenwand 42 und begrenzt gemeinsam mit dieser einen konvergent-divergenten Heißgas-Strömungskanal 56 mit einem kreisringförmigen Düsenhalsquerschnitt h₁, während das Düsenverlängerungsteil 48, das in diesem Flugzustand nicht zur Erweiterung des Heißgas-Strömungskanals 56 benötigt wird, in die eingefahrene Lage zurückgezogen ist und in dieser die äußere Ringwand eines an den Verteilerring 50 anschließenden Luftauslaßkanals 58 bildet, der das divergente Ende der Düsenaußenwand 42 ringförmig umschließt, wobei das Verlängerungsteil 48 in dieser Lage über eine Gleitdichtung 60 mit einem in Richtung des Düsenaustrittsendes offenen Ringspalt 62 des Verteilerrings 50 zusammenwirkt. Auf diese Weise wird die in diesem Zustand einlaufseitig abgetrennte Grenzschichtluft über den zwischen Düsenaußenwand 42 und Verlängerungsteil 48 begrenzten Luftauslaßkanal 58 über den gesamten Außenumfang des Austrittsendes 54 eingeblasen, wodurch nicht nur ein zusätzlicher Schubeffekt erzielt, sondern vor allem auch die Totwasserzone 64, die sich sonst in diesem Flugzustand zwischen dem - in den Figuren gestrichelt dargestellten - Schubstrahl stromabwärts der Düsenaußenwand 42 und der Umgebungsluftströmung (strichpunktiert dargestellt) ausbildet, wirksam abgebaut.

Fig. 3 zeigt die Schubdüse 16 im Turbobetrieb nahe der Unschalt-Machzahl. Der Zentralkörper 44 ist auf dem Träger 46 mit dem größten Zentralkörper-Durchmesser D bis zum Austrittsquerschnitt der festen Düsenaußenwand 42 verstellt, so daß der Düsenhalsquerschnitt auf h₂ vergrößert ist. Das Düsenverlängerungsteil 48 befindet sich weiterhin im eingefahrenen Zustand, ist dabei jedoch infolge der Gleitdichtwirkung ohne Dichtverlust gegenüber dem Ringspalt 62 begrenzt axial verstellbar und ermöglicht somit eine Regelung des wirksamen Strömungsquerschnitts des Luftauslaßkanals 58, über den gemäß Fig. 3 weiterhin - nunmehr allerdings über einen wesentlich verkleinerten Strömungsquerschnitt - Grenzschichtluft in die Totwasserzone 64 ausgeblasen wird.

Fig. 4 zeigt in der oberen Hälfte die Schubdüse 16 kurz nach dem Umschalten auf den Stauluftantrieb. Das Düsenverlängerungsteil 48 ist aus dem mit der Gleitdichtung 60 zusammenwirkenden Einfahrzustand nach hinten in die Ausfahrposition verschoben, in der es formgleich divergent an das Austrittsende 54 der Düsenaußenwand 42 anschließt, wodurch das Erweiterungsverhältnis der Düsenaußenkontur deutlich auf einen der Austrittsfläche A des Verlängerungsteils 48 im Verhältnis zur kleinsten Querschnittsfläche E der Düsenaußenwand 42 entsprechenden Wert erhöht wird. In diesem Flugzustand reicht der Schubstrahl bis zur Umgebungsströmung, so daß die Störwirkung einer Totwasserzone am Austrittsende des Heißgas-Strömungskanals entfällt und der Luftauslaßkanal 58 zur Sekundär-Lufteinblasung nicht mehr benötigt wird. Gleichfalls wird auf die Grenzschichtabtrennung verzichtet, und daher die Verschlußklappe 34 in die in Fig. 1 gezeigte Schließlage verschwenkt. Der Zentralkörper 44 befindet sich in der hinteren Endstellung, in der seine größte Querschnittsfläche D in der Austrittsebene A des divergenten Verlängerungsteils 48 liegt und mithin der Düsenhalsquerschnitt h₃ des Heißgas-Strömungskanals 56 seinen Maximalwert erreicht.

Bei einer weiteren Erhöhung der Fluggeschwindigkeit bis auf annähernd 7 Mach wird der Zentralkörper 44 unter kontinuierlicher Verringerung des Düsenhalsquerschnitts (und hierzu gegenläufiger Vergrößerung der Heißgas-Austrittsfläche am divergenten Ende des Düsenverlängerungsteils 48) nach vorne verschoben, bis der größte Zentralkörperquerschnitt D in der Ebene E kleinsten Düsenwandaußendurchmessers liegt und mithin der von der Schubdüse begrenzte Heißgas-Strömungskanal 56 seinen minimalen Düsenhalsquerschnitt h₄ und das maximale Expansionsverhältnis erreicht (untere Hälfte der Fig. 4; und Fig. 1). Im Hinblick auf eine gesteuerte Schubstrahlexpansion stromabwärts der ausgefahrenen Schubdüsenverlängerung 48 ist eine an diese formgleich anschließende Expansionsrampe 66 zur einseitigen Schubstrahlbegrenzung am Heckende des Flugkörpers 2 angeordnet.

## Patentansprüche

1. Luftatmendes Strahltriebwerk, insbesondere Hyperschall-Kombinationstriebwerk, mit mindestens
- einer Brennkammer (10) und einer dieser nachgeschalteten Schubdüse (16),
- einer triebswerksfesten, in Richtung des Düsenaustrittsendes divergenten Düsenaußenwand (42), gekennzeichnet durch
- einen axial verfahrbaren, ringförmig und divergent ausgebildeten, in der Ausfahrposition im wesentlichen formgleich an das Austrittsende (54) der triebwerksfesten Düsenaußenwand (42) anschließenden Schubdüsen-Verlängerungsteil (48), und
- eine selektiv durch axiales Verfahren des Schubdüsen-Verlängerungsteils (48) zuschaltbare Sekundärlufleinblasung am Austrittsende (54) der triebwerksfesten Düsenaußenwand (42), wobei der Schubdüsen-Verlängerungsteil (48) im eingefahrenen Zustand einen die triebswerksfeste Düsenaußenwand (42) ringförmig umschließenden Luftauslaßkanal (58) zur Sekundärlufteinblasung bildet.

2. Strahltriebwerk nach Anspruch 1,
wobei das Schubdüsen-Verlängerungsteil (48) im eingefahrenen Zustand zur Veränderung des wirksamen Strömungsquerschnitts des Luftauslaßkanals (58) begrenzt axial verstellbar ist.

3. Strahltriebwerk nach Anspruch 1 oder 2,
mit einem die Düsenaußenwand (42) umgreifenden, triebswerksfesten Verteilerring (50) zur Sekundärluflzufuhr zum Luftauslaßkanal (58), wobei der Verteilerring (50) einen in Richtung des Düsenaustrittsendes offenen, im eingefahrenen Zustand des Schubdüsen-Verlängerungsteils (48) von diesem dichtend umschlossenen Ringspalt (62) aufweist.

4. Strahltriebwerk nach den Ansprüchen 2 und 3,
mit einer innerhalb des axialen Verstellbereichs im eingefahrenen Zustand des Schubdüsen-Verlängerungsteils (48) wirksamen Gleitdichtung (60) zwischen Verteilerring (50) und Schubdüsen-Verlängerungsteil (48).

5. Strahltriebwerk nach den Ansprüchen 3 oder 4,
wobei der Verteilerring (50) im Bereich des geringsten Außendurchmessers (E) der triebwerksfesten Düsenaußenwand (42) angeordnet ist.

6. Strahltriebwerk nach einem der vorhergehenden Ansprüche,
mit stromaufwärts des Luftauslaßkanals (58) angeordneten Absperrorganen (34) zum Abschalten des Sekundärluflstroms in der Ausfahrposition des Schubdüsen-Verlängerungsteils (48).

7. Strahltriebwerk nach einem der vorhergehenden Ansprüche,
mit einer Grenzschichtluft-Abtrennung am Triebswerkseinlauf zur Sekundärlufleinblasung im eingefahrenen Zustand des Schubdüsen-Verlängerungsteils (48).

8. Strahltriebwerk, insbesondere luftatmendes Strahltriebwerk nach Anspruch 1, mit mindestens
- einer Brennkammer (10) und einer dieser nachgeschalteten Schubdüse (16),
- einer triebwerksfesten, in Richtung des Düsenaustrittsendes divergenten Düsenaußenwand (42), gekennzeichnet durch
- einen axial verfahrbaren, divergent ausgebildeten, in der Ausfahrposition im wesentlichen formgleich an das Austrittsende (54) der triebwerksfesten Düsenaußenwand (42) anschließenden Schubdüsen-Verlängerungsteil (48), und
- einen axial verstellbaren, pilzförmig ausgebildeten Zentralkörper (44), der in der Ausfahrposition des Schubdüsen-Verlängerungsteils (48) mit dem größten Zentralkörper-Querschnitt (D) bis in den Bereich des Schubdüsen-Verlängerungsteils (48) vorschiebbar ist.

9. Strahltriebwerk nach Anspruch 8,
wobei der Zentralkörper (44) mit seinem größten Querschnitt (D) bis zur Austrittsebene (A) des ausgefahrenen Schubdüsen-Verlängerungsteils (48) verstellbar ist.

10. Strahltriebwerk nach einem der vorhergehenden Ansprüche,
mit einer stromabwärts der Schubdüse (16) in der Ausfahrposition des divergenten Schubdüsen-Verlängerungsteils (48) an dieses formgleich anschließenden Expansionsrampe (66) an dem dem Triebwerk zugeordneten Flugkörper (2) zur einseitigen Schubstrahlbegrenzung.

## Claims

1. An air-breathing jet engine, particularly a hypersonic combination engine, having at least
- one combustion chamber (10) and a thrust nozzle (16) disposed downstream thereof,
- a nozzle outer wall (42) fixed to the engine and divergent towards the nozzle outlet end, characterised by
- on axially displaceable thrust nozzle extension piece (48) of annular and divergent construction, which in its extended position adjoins, with a substantially identical shape, the outlet end (54) of the nozzle outer wall (42) fixed to the engine, and
- secondary air injection, which can be selectively connected by axially displacing the thrust nozzle extension piece (48), at the outlet end (54) of the nozzle outer wall (42) fixed to the engine, wherein in its retracted state the thrust nozzle extension piece (48) forms an air outlet duct (58), which annularly surrounds the nozzle outer wall (42) fixed to the engine, to the secondary air injection.

2. A jet engine according to claim 1,
wherein in its retracted state the thrust nozzle extension piece (48) is restrictedly axially adjustable for varying the effective flow cross-section of the air outlet duct (58).

3. A jet engine according to claim 1 or 2,
having a distributor ring (50), which fits round the nozzle outer wall (42) and is fixed to the engine, for the supply of secondary air to the air outlet duct (58), wherein the distributor ring (50) has an annular gap (62) which is open towards the nozzle outlet end and which in the retracted state of the thrust nozzle extension piece (48) is surrounded sealed by the latter.

4. A jet engine according to claims 2 and 3,
having a sliding seal (60) between the distributor ring (50) and the thrust nozzle extension piece (48), which sliding seal is effective within the axial range of adjustment in the retracted state of the thrust nozzle extension piece (48).

5. A jet engine according to claims 3 or 4,
wherein the distributor ring (50) is disposed in the region of the smallest outside diameter (E) of the nozzle outer wall (42) fixed to the engine.

6. A jet engine according to any one of the preceding claims,
having shut-off devices (34) disposed upstream of the air outlet duct (58) for shutting off the secondary air flow in the extended position of the thrust nozzle extension piece (48).

7. A jet engine according to any one of the preceding claims,
with boundary layer air separation at the engine inlet for the injection of secondary air in the retracted state of the nozzle extension piece (48).

8. A jet engine, particularly an air-breathing jet engine according to claim 1, having at least
- one combustion chamber (10) and a thrust nozzle (16) disposed downstream thereof,
- a nozzle outer wall (42) fixed to the engine and divergent towards the nozzle outlet end, characterised by
- an axially displaceable thrust nozzle extension piece (48) of divergent construction, which in its extended position adjoins, with a substantially identical shape, the outlet end (54) of the nozzle outer wall (42) fixed to the engine, and
- an axially adjustable central body (44) of mushroom-shaped construction, which, in the extended position of the thrust nozzle extension piece (48), can be advanced until its largest central body cross-section (D) is in the region of the thrust nozzle extension piece (48).

9. A jet engine according to claim 8,
wherein the largest cross-section (D) of the central body (44) can be adjusted as far as the outlet plane (A) of the extended thrust nozzle extension piece (48).

10. A jet engine according to any one of the preceding claims,
having an expansion ramp (66), for delimiting the thrust jet on one side, on the flying object (2) associated with the engine and downstream of the thrust nozzle (16), which expansion ramp adjoins the divergent thrust nozzle extension piece (48) with a shape identical thereto in the extended position of the latter.

## Revendications

1. Statoréacteur aérobie, en particulier réacteur combiné hypersonique, comprenant au moins :
- une chambre de combustion (10) suivie d'une tuyère de poussée (16),
- une paroi extérieure de tuyère (42) solidaire du réacteur et divergeant en direction de l'extrémité de sortie de la tuyère, caractérisé par
- une partie de prolongement de tuyère de poussée (48) annulaire et divergente, déplaçable axialement, se raccordant, en position déployée, essentiellement sans discontinuité de forme à l'extrémité de sortie (54) de la paroi extérieure de tuyère (42) solidaire du réacteur, et
- une injection d'air secondaire pouvant être ajoutée sélectivement à l'extrémité de sortie (54) de la paroi extérieure de tuyère (42) solidaire du réacteur, par déplacement axial de la partie de prolongement de tuyère de poussée (48), cette partie formant, à l'état rétracté, un canal de sortie d'air (58) entourant annulairement la paroi extérieure de tuyère (42) solidaire du réateur, en vue de l'injection d'air secondaire.

2. Statoréacteur suivant la revendication 1, dans lequel la partie de prolongement de tuyère de poussée (48) est réglable axialement sur une course limitée, à l'état rétracté, en vue de la variation de la section d'écoulement utile du canal de sortie d'air (58).

3. Statoréacteur suivant la revendication 1 ou 2, avec un anneau distributeur (50) solidaire du réacteur, entourant la paroi extérieure de tuyère (42), en vue de l'amenée d'air secondaire au canal de sortie d'air (58), l'anneau distributeur (50) présentant une fente annulaire (62) ouverte en direction de l'extrémité de sortie de tuyère, laquelle fente, à l'état rétracté de la partie de prolongement de tuyère de poussée (48), est entourée de façon étanche par cette dernière.

4. Statoréacteur suivant les revendications 2 et 3, comprenant, entre l'anneau distributeur (50) et la partie de prolongement de tuyère de poussée (48), un joint à glissement (60) efficace dans la zone de réglage axial à l'état rétracté de la partie de prolongement de tuyère de poussée (48).

5. Statoréacteur suivant les revendications 3 ou 4, l'anneau distributeur (50) étant disposé dans la zone du plus faible diamètre extérieur (E) de la paroi extérieure de tuyère (42) solidaire du réacteur.

6. Statoréacteur suivant l'une des revendications précédentes, comprenant des organes d'arrêt (34) disposés en amont du canal de sortie d'air (58) pour arrêter le flux d'air secondaire dans la position déployée de la partie de prolongement de tuyère de poussée (48).

7. Statoréacteur suivant l'une des revendications précédentes, comprenant un décollement de couche limite d'air à l'entrée du réacteur en vue de l'injection d'air secondaire à l'état rétracté de la partie de prolongement de tuyère de poussée (48).

8. Statoréacteur, en particulier statoréacteur aérobie suivant la revendication 1, comprenant au moins :
- une chambre de combustion (10) suivie d'une tuyère de poussée (16),
- une paroi extérieure de tuyère (42) solidaire du réacteur et divergeant en direction de l'extrémité de sortie de tuyère, caractérisé par
- une partie de prolongement de tuyère de poussée (48) divergente, axialement déplaçable, se raccordant, en position déployée, essentiellement sans discontinuité de forme à l'extrémité de sortie (54) de la paroi extérieure de tuyère (42) solidaire du réacteur, et
- un corps central (44) en forme de champignon, réglable axialement, qui, dans la position déployée de la partie de prolongement de tuyère de poussée (48), peut être avancé, par sa section la plus grande (D), jusque dans la zone de la partie de prolongement de tuyère de poussée (48).

9. Statoréacteur suivant la revendication 8, dans lequel le corps central (44) est réglable, par sa section la plus grande (D), jusqu'au plan de sortie (A) de la partie de prolongement de tuyère de poussée (48) déployée.

10. Statoréacteur suivant l'une des revendications précédentes, comprenant, sur l'aéronef (2) auquel est associé le réacteur, en vue de la limitation unilatérale du jet de poussée, une rampe d'expansion (66) qui, en aval de la tuyère de poussée (16), dans la position déployée de la partie de prolongement de tuyère de poussée (48) divergente, se raccorde sans discontinuité de forme à ladite partie.
